# EUROPEAN PATENT APPLICATION

(11) **EP 3 260 700 A1**
(43) Date of publication of application: **27.12.2017**
(21) Application number: 16175718.2
(22) Date of filing: 22.06.2016
(51) Int. Cl.: F03D 17/00, F03D 7/04

(54) **A COMPUTER-BASED METHOD AND A PREDICTION DEVICE FOR PREDICTING OPERATING DATA OF A WIND TURBINE**

(71) Applicant: Siemens Aktiengesellschaft, 80333 München (DE)
(72) Inventor: Heesche, Kai, 81539 München (DE); Hentschel, Alexander, 81929 München (DE); Otte, Clemens, 81739 München (DE); Sterzing, Volkmar, 85579 Neubiberg (DE); Udluft, Steffen, 82223 Eichenau (DE)

(57) **Abstract**

A computer-based method for predicting operating data of a first wind turbine, said method comprising the steps of acquiring (150) first input features for the first wind turbine during an operational phase; transmitting (160) the first input features to a soft sensor, wherein the soft sensor is trainable during a training phase by means of training input features and a target value acquired for a training wind turbine during a training phase; predicting (170) the operating data by the soft sensor by means of the first input features.

## Description

The control of wind turbines can be considered as a constrained optimization problem. The goal usually is to maximize the amount of produced power while keeping the load on system components (e.g. blades, tower) as well as noise emissions within defined limits. While it is possible to directly measure strain loads or noise emissions of a wind turbine, commercially available wind turbines are generally not equipped with the respective sensors due to cost or durability restrictions. Consequently, measurements of strain loads and noise emissions are generally not available on commercial wind turbines. This requires conservative control settings with larger margins to the limits and even then it can be difficult to ensure that the limits are kept in adverse wind conditions. Additionally, the larger margins can lead to suboptimal power productions. For example, for some blade types the power production can be increased by using more negative pitch angles, which on the other hand also increases loads.

It is an object of the present invention to provide a computer-based method and a prediction device for predicting operating data for a wind turbine.

This object is achieved by the features of the independent claims. Advantageous embodiments emerge from the dependent claims.

The operations in accordance with the teachings herein may be performed by a computer specially constructed for the desired purposes or by a general purpose computer specially configured for the desired purpose or for the desired operations by a computer program stored in a computer readable storage medium.

A first aspect of the present invention provides a computer-based method for providing a soft sensor for a first wind turbine by executing the following steps:
- acquiring (110) training input features for a target value of a training wind turbine during a training phase;
- acquiring (120) the target value of the training wind turbine during the training phase;
- training (130) the soft sensor during the training phase, wherein
   - soft sensor is trained by means of the training input features and the target value;
   - the target value is predictable as operating data by the soft sensor by means of the training input features;
- providing the trained soft sensor.

Unless specifically stated otherwise, as apparent from the following discussions, it is appreciated that throughout the specification discussions utilizing terms such as "processing", "computing", "computer-based", "calculating", "determining", "generating", "configuring", "predicting" or the like, refer to the action and/or processes of a computer that manipulates and/or transforms data into other data, said data represented as physical, e.g. such as electronic, quantities. The term "computer" should be expansively construed to cover any kind of electronic device with data processing capabilities, including, by way of non-limiting example, personal computers, servers, handheld computer systems, Pocket PC devices, Cellular communication device and other communication devices with computing capabilities, processors and other electronic computing devices.

As used herein, the term "processor" refers, for example, to controllers, microcontrollers (e.g. digital signal processor (DSP) possibly in combination with memory and storage units memory unit storing computer-readable instructions, application specific integrated circuit "ASIC", etc.), processor cores, central processing units, integrated circuits/processing circuitry (e.g. application specific integrated circuit "ASIC", field programmable gate arrays "FPGA" etc.) or digital signal processors. Furthermore, the term "processor" can, for example, refer to virtual processors, virtual CPUs, soft processors or soft CPUs. Moreover, said processor can, for example, be configured to execute computer readable instructions such that said processor is preferably configured to perform functions which implement the invention.

As used herein, the term "module" refers, for example, to a processor and/or a memory unit storing computer-readable instructions. For example, the processor is specifically configured to execute the computer readable instructions such that said processor is preferably configured to perform functions which implement the invention, such as a step of the inventive method.

As used herein, the term "soft sensor" refers, for example, to a technique (also called virtual sensing) which uses information available from other measurements and process parameters to predict or calculate an estimate of the quantity of interest, such as the operating data (e.g., strain loads of rotor blades). For that purpose a soft sensor is preferably trained by means of real sensor data, for example, provided by training system during a training phase. For example, a temperature (operating data) of an engine can, for example, be predicted by a number of revolutions per minute of the engine and other data like a runtime of the engine. This data can, for example, be called input features. During the training phase the soft sensor can, for example, be trained by means of the training system, which preferably provides the value to predict/target value (e.g., the temperature) and the other data (e.g., the number of revolutions per minute and the other data like the runtime of the engine). Preferably during the training phase the value to predict is called target value, because it is directly measured and used to train the soft sensor. Preferably, the soft sensor associates the number of revolutions and the other data with the temperature of the engine, for example, by calculating a model of the engine. If the training of the soft sensor is complete, the soft sensor, for example, is installed into a regular engine (such as an engine without a sensor providing the engine temperature). Using the soft sensor in a regular engine can be called operational phase. As already mentioned, the regular engine does, for example, not comprise a sensor providing the engine temperature; instead the engine temperature is preferably predicted by the soft sensor, more preferably by means of the available sensor data (input features), such as the driving time and/or the number of revolutions per minute of the engine. The soft sensor can, for example, be implemented as a neural network (e.g. multi-layer perceptron) or another nonlinear regression approach known in machine learning (e.g. Gaussian Process, Random Forests, Parametric Models)

As used herein, the term "target value" refers, for example, to a physical quantity which is directly applied to components (e.g., strain load to rotor blades or a tower) of a wind turbine or generated (e.g., sound emissions) by the components of a wind turbine. Preferably, the target value is not measured during the operational phase and is, for example, only measurable during the training phase.

As used herein, the term "operating data" refers, for example, to an approximation of a physical quantity which is directly applied to components (e.g., strain load to rotor blades or a tower) of a wind turbine or generated (e.g., sound emissions) by the components of a wind turbine. Preferably, the operating data is determined/predicted or approximated by the trained soft sensor by means of (first) input features, wherein the soft sensor was trained by a directly measured target value and training input features. In other words, the target value preferably corresponds to the real value/physical quantity applied to the components and the operating data is preferably an approximation of the target value predicted by the soft sensor by means of the (first) input features. The operating data can, for example, be called predicted value. Preferably, the predicted target value for the first wind turbine is called operating data.

As used herein, the term "input features" (e.g., training input features, first input features) refers, for example, to physical quantities which can be measured during the operational phase and during the training phase preferably without equipping a wind turbine with additional measurement equipment. Input features can, for example, be sensor data or data of/about a wind turbine which are measured during the training phase and/or operational phase. Input features measured for a wind turbine during the training phase are, for example, called training input features. Input features measured for a wind turbine during the operational phase are, for example, called first input features. The input features are, for example, given as multivariate time-series, e.g. acceleration measurements and/or a rotor speed and/or a pitch angle of blades and/or a generated electrical power of a wind turbine. Alternatively and/or additionally the operational data can, for example, be a wind direction and/or wind speed which drives a wind turbine. The measured quantities/measurands or physical quantities of the training input features and the first input features are identical or similar.

As used herein, the term "operational phase" refers, for example, to a (temporal) phase during the operation of a wind turbine where the target value (e. g., noise emission and/or strain load of rotor blades) of a wind turbine cannot be measured directly. Preferably, during the operational phase the wind turbine is active and generates electrical power. The term "operational phase" can, for example, be called "recall" or "recall phase".

As used herein, the term "training phase" refers, for example, to a (temporal) phase during the operation of a wind turbine where the target value (e.g., strain load and/or sound emissions of components) of a wind turbine can be measured directly. The wind turbine can, for example, be the first wind turbine or the training wind turbine. More particularly, during the training phase the (first and/or training) wind turbine is equipped with sensors to acquire the target value (e.g., the strain load or sound emissions). For example, the training phase and the operational phase can be temporarily completely separated from each other or at least partially temporarily overlap (depending on the circumstances, e. g., installation of a new wind turbine or maintenance of an already installed wind turbine).

As used herein, the term "acquisition module" refers, to a sensor or measurement equipment to measure a physical quantity. For example, an acquisition module can be a LIDAR to measure upcoming guests of wind and/or an acceleration sensor to measure the acceleration of the wind turbine and/or a speed sensor to measure a rotor speed of the wind turbine and/or a pitch angle sensor to measure a pitch angle of blades of a wind turbine and/or a power sensor to measure generated electrical power of a wind turbine and/or a speed sensor to measure an actual wind speed driving the wind turbine.

As used herein, the term "correction data" refers, for example, to information about future events. Preferably, an approaching gust of high wind may be detected by LIDAR and the soft sensor would then preferably predict an extreme strain load situation (e. g. for the blades of the wind turbine) by means of the operating data, which a turbine controller could, for instance, use to set the pitch angles of the blades appropriately to keep the strain load within predefined limit. Alternatively or additionally the correction data can, for example, comprise background noise measurements and/or information about a (expected) wear and tear of the wind turbine and its influence on the determination/prediction of the prediction value.

As used herein, the term "physical model" refers, for example, to a model based on finite elements to preferably calculate the strain load (e.g., the strain load of rotor blades) of a wind turbine for specific wind speeds.

Moreover, the first wind turbine and the training wind turbine can, for example, be the same wind turbine or wind turbines identical in construction or wind turbine similar in construction.

Preferably, the described approach generates a computational model, subsequently referred to as soft sensor, which can be used instead of a physical sensor.

In detail, the inventive method can, for example, predict the operating data, such as loads of a wind turbine and/or sound emissions of the wind turbine. More particularly, once the soft sensor is, for instance, trained on the training wind turbine, preferably equipped with appropriate measurement equipment, the soft sensor can, for example, provide estimates or predictions/approximations (operating data) of these variables (target value) on standard turbines where no special instrumentation exists.

Preferably, the wind turbine can dynamically react on the operating data, for example, by means of a turbine controller.

Furthermore, to measure, for example, the target value, the training wind turbine can comprise a first acquisition module and a second acquisition module, for example, strain gauges. The first acquisition unit can, for example, measure the (training) input features of the training wind turbine and the second acquisition module can, for example, measure the target value for the training wind turbine. The first wind turbine can, for example, comprise a third acquisition module. The third acquisition module can, for example, measure the (first) input features of the first wind turbine.

In other words, the inventive method preferably uses other standard sensors which provide the input features (or indirect information) about the target value (e.g., strain loads and/or noise emissions), such as acceleration sensors in the nacelle, to predict operating data of the target value, e.g., as a predicted value. Preferably, the input features contain (indirect) information about the target value (e.g., strain loads and/or noise emissions) of a wind turbine, but preferably do not represent a direct measurement of the respective quantity. In other words the target value is preferably measured by indirect measurements.

In an embodiment of the method during the training phase the soft sensor is trained by means of correction data for predicting the operating data.

For example, rotor blades are exposed both to short-term extreme target values (e.g. extreme strain loads), such as those caused by sudden gusts of high wind, and to fatigue loads, which accumulate over the lifetime of the turbine. Preferably, the correction data can be used to predict (and thus avoid) short-term extreme operating data (e.g., extreme loads of the rotor blades of the wind turbine) if, for instance, information about an approaching gust of wind is taken into account by the soft sensor.

In another embodiment of the method the correction data comprise information of upcoming events, wherein the upcoming events comprise changes of a wind speed.

In another embodiment of the method the soft sensor is initialized with a physical model of the training wind turbine before training the soft sensor.

By initializing the soft sensor with the physical model, for example, the duration of the training phase for the soft sensor can be reduced.

In another embodiment of the method the physical model simulates target values for input features and/or predefined speeds of wind.

In another embodiment of the method the input features comprise rotor speeds and/or nacelle accelerations of the training wind turbine.

A further aspect of the present invention provides a computer-based method for predicting operating data of a first wind turbine by executing the following steps:
- acquiring (140) first input features for the first wind turbine during an operational phase of the first wind turbine;
- transmitting (150) the first input features to a soft sensor, wherein the soft sensor is trainable during a training phase by means of training input features and a target value acquired for a training wind turbine during the training phase;
- predicting (160) the operating data by the soft sensor by means of the first input features.
In detail, the inventive method can, for example, predict the operating data, such as loads of a wind turbine and/or sound emissions of the wind turbine. More particularly, once the soft sensor is, for instance, trained on the training wind turbine, preferably equipped with appropriate measurement equipment, the soft sensor can, for example, provide estimates or predictions/approximations (operating data) of these variables (target value) on standard turbines where no special instrumentation exists.

Preferably, the wind turbine can dynamically react on the operating data, for example, by means of a turbine controller.

Furthermore, to measure, for example, the target value, the training wind turbine can comprise a first acquisition module and a second acquisition module, for example, strain gauges. The first acquisition unit can, for example, measure the (training) input features of the training wind turbine and the second acquisition module can, for example, measure the target value for the training wind turbine. The first wind turbine can, for example, comprise a third acquisition module. The third acquisition module can, for example, measure the (first) input features of the first wind turbine.

In other words, the inventive method preferably uses other standard sensors which provide the input features (or indirect information) about the target value (e.g., strain loads and/or noise emissions), such as acceleration sensors in the nacelle, to predict operating data of the target value, e.g., as a predicted value. Preferably, the input features contain (indirect) information about the target value (e.g., strain loads and/or noise emissions) of a wind turbine, but preferably do not represent a direct measurement of the respective quantity. In other words the target value is preferably measured by indirect measurements.

In another embodiment of the method the soft sensor takes correction data into account for predicting the operating data.

In another embodiment of the method the correction data comprise information of upcoming events, wherein the upcoming events comprise changes of a wind speed.

In another embodiment of the method the correction data is acquired by a forth acquisition module during the operational phase.

For example, the forth acquisition module can be a LIDAR, which measures the approaching wind speeds to provide information, e.g., about an approaching gust of wind.

In another embodiment of the method the operating data serves as an input for a turbine controller of the first wind turbine to keep the target value within a predefined limit.

In another embodiment of the method the turbine controller adjusts blades of the first wind turbine by means of the operating data to keep the target value within the predefined limit.

In another embodiment of the method the correction data is acquired by a forth acquisition module during the operational phase.

In another embodiment of the method the operating data serves as an input for a turbine controller of the first wind turbine to keep the target value within a predefined limit.

For example, by controlling the wind turbine based on the operating data, extreme loads on the rotor blades can preferably be predicted and avoided.

In another embodiment of the method the turbine controller adjusts control parameters of the generator and/or rotor of the first wind turbine by means of the operating data to keep the target value within the predefined limit..

In another embodiment of the method the soft sensor is initialized with physical model of the training wind turbine before training the soft sensor.

A further aspect of the present invention provides a training device for providing a soft sensor for a first wind turbine comprising:
- a first acquisition module for acquiring training input features for a target value of a training wind turbine during a training phase;
- a second acquisition module for acquiring the target value of the training wind turbine during the training phase;
- a first training module for training the soft sensor during the training phase, wherein
   - the soft sensor is trained by means of the training input features and the target value;
   - the target value is predictable as operating data by the soft sensor by means of the training input features;
- a providing module for providing the trained soft sensor.

In an embodiment of the training device, the training device comprises at least one further module to implement further embodiments of the inventive method for providing a soft sensor.

A further aspect of the present invention provides a prediction device for predicting operating data of a first wind turbine comprising
- a third acquisition module for acquiring first input features for the first wind turbine during an operational phase of the first wind turbine;
- a first communication module for transmitting the first input features to a soft sensor, wherein the soft sensor is trainable during a training phase by means of training input features and a target value acquired for a training wind turbine during the training phase;
- a first prediction module for predicting the operating data by the soft sensor by means of the first input features.

In an embodiment of the prediction device, the prediction device comprises at least one further module to implement further embodiments of the inventive method for predicting operating data.

A further aspect of the present invention provides an inventive training device and/or an inventive prediction device.

In an embodiment of the wind turbine comprises a wind turbine controller which controls the wind turbine based on the operating data.

A further aspect of the present invention provides a computer program product storing executable instructions adapted to perform the method disclosed by the present disclosure.

According to a preferred variant of the computer program product, the program product stores executable instructions adapted to configure a manufacturing device, for example, a 3D-printer or another device to create the inventive device or system.

Furthermore, a providing apparatus is claimed for saving and/or providing a program data and/or instruction block of said executable instructions (method and/or device). The providing apparatus can be a data storage saving and/or providing the computer program product. Alternatively, the providing apparatus can be a computer system and/or a server system and/or a network and/or a cloud-based computer system and/or virtual computer system. The providing apparatus saves and/or provides the computer program product. Preferably, the complete computer program product is provided by said providing apparatus in the form of a download, for example, as a file or a data stream. Alternatively, the computer program product is provided by at least two partial downloads, for example, provided by a peer to peer network, each containing a piece of said computer program product. For example such a computer program product can be provided by a data storage, which is read and executed by a computer system. As a consequence the computer system is able to execute the disclosed method. Alternatively and/or additionally, the computer program configures a manufacturing device as above mentioned.

A data storage or computer-readable medium can be electronic, magnetic, optical, or a semiconductor system (or apparatus or device). Examples of a computer-readable medium include, but are not limited to, a semiconductor or solid state memory, magnetic tape, a removable computer diskette, a random access memory (RAM), a read-only memory (ROM), a rigid magnetic disk, an optical disk, etc. Current examples of optical disks include compact disk-read only memory (CD-ROM), compact disk-read/write (CD-R/W) and digital versatile disk (DVD).

Further modifications and variations will emerge from the features of the dependent claims.

In the following, possible embodiments of the different aspects of the present disclosure are described in more detail with reference to the enclosed figures.
- Fig. 1A: shows an embodiment of the invention which illustrates training a soft sensor;
- Fig. 1B: shows an embodiment of the invention illustrates predicting operating data;
- Fig. 2: shows an embodiment of the invention implemented by a training device;
- Fig. 3: shows an embodiment of the invention implemented by a prediction device;
- Fig. 4: shows an embodiment of the invention implemented by a wind turbine;

The accompanying drawings are intended to provide a better understanding of the embodiments. They show embodiments and serve in conjunction with the description to explain principles and concepts of the disclosed subject matter. Other embodiments and many of the cited advantages will emerge in respect of the drawings. The elements of the drawings are not necessarily shown in scale with one another. Identical reference characters here designate identical components or components of comparable effect.

Preferably, the presented embodiments are implemented by a processor and/or a memory device unless otherwise noted.

In detail, to implement and/or execute the invention, the inventive method, components, devices etc. comprise at least one processor and/or at least one memory device unless otherwise noted. Additionally, the inventive method, components, devices etc. comprise, for example, other features known by a skilled person. For example, these features can be an input device, like a computer mouse, or a display device, like a TFT-display.

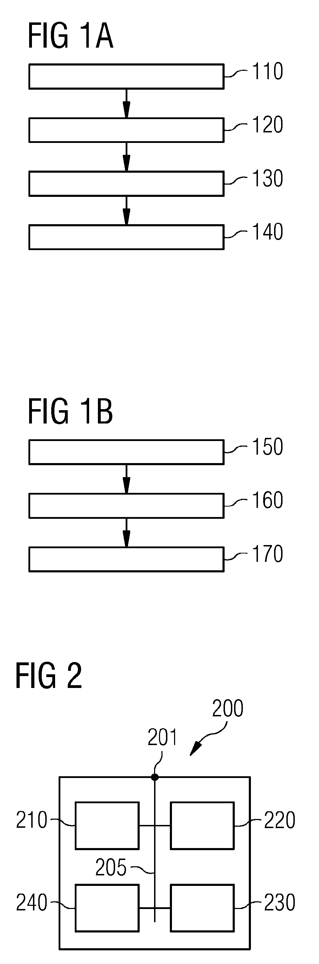

In Fig. 1A, an embodiment of the invention is shown which illustrates training a soft sensor.

In detail, Fig. 1A depicts a computer-based method for providing a soft sensor for a first wind turbine. The method executes several steps, for example, by a processor which is specifically adapted to provide a soft sensor which preferably predicting operating data for the first wind turbine.

The method comprises a first step for acquiring 110 training input features for a target value of a training wind turbine during a training phase (for example, of the soft sensor). The method comprises a second step for acquiring 120 the target value of the training wind turbine during the training phase.

The method comprises a third step 130 for training the soft sensor during the training phase, wherein
- the soft sensor is trained by means of the training input features and the target value;
- the target value is predictable as operating data by the soft sensor by means of the training input features;

The method comprises a forth step for providing 140 the trained soft sensor.

In other words the soft sensor is, preferably, trained to predict the target value (e.g., strain load and/or sound emissions of the rotor blades) of the first wind turbine based on the (first) input features of the first wind turbine, such as operational sensor data. Preferably, the predicted target value for the first wind turbine is called operating data. The input features can, for example, be given as multivariate time-series (e.g. acceleration measurements, rotor speed, pitch angle, electrical power, wind direction). The measured quantities/measurands or physical quantities of the training input features and the first input features are identical or similar.

More particularly, the soft sensor can be implemented as a neural network (e.g. multi-layer perceptron) or another nonlinear regression approach known in machine learning (e.g. Gaussian Process, Random Forests, Parametric Models). Preferably, to train the soft-sensor the training wind turbine is specially equipped with measurement equipment, e.g. with strain gauges attached to the rotor blades for measuring the occurring loads/target value.

In a preferred variant of the invention, the trained soft sensor can, for example, be provided as a computer program product or a software component.

In another preferred variant of the invention, the soft sensor is initialized with a physical (load) model of the wind turbine at the beginning of the training phase. The soft sensor could, for example, be used to learn a corrective offset to a physical model, which is based on structural dynamics, in order to compensate for deficits in this physical model. For example, target value simulations of the rotor blades at predefined input features could be used as a physical model and the soft sensor would preferably learn when and how the output of the physical model needs to be corrected.

Preferably, both the soft sensor and the physical model would then be deployed on standard wind turbines, without the special instrumentation of the training wind turbine. If, for example, the physical model cannot be deployed online then preferably another data-driven model (e.g. neural network) can learn to approximate it. For example, this two-step approach is advantageous, because (strain) load simulations for the target value are easily available and yielding a large data set for training.

In another preferred variant of the invention, a processor is specifically configured to execute the computer readable instructions such that said processor is preferably configured to perform functions which implement a step/all steps of the inventive method.

In Fig. 1B, an embodiment of the invention is shown which illustrates predicting operating data of a first wind turbine.

The method comprises a first step for acquiring 150 first input features for the first wind turbine during an operational phase of the first wind turbine.

The method comprises a second step for transmitting 160 the first input features to a soft sensor, wherein the soft sensor is trainable during a training phase by means of training input features and a target value acquired for a training wind turbine during a training phase.

The method comprises a third step for predicting 170 the operating data by the soft sensor by means of the first input features. Preferably, the third step is as well executed during the operational phase.

In a preferred variant of the invention, the operating data is transmitted to turbine controller of the first wind turbine to optimize AEP (annual energy production) while keeping the target value within acceptable ranges. For example, the turbine controller can decide to use more negative pitch angles to increase the power production if the operating data allows it.

In another preferred variant of the invention, the soft sensor can additionally include information about future events. For example, an approaching gust of high wind may be detected by LIDAR. For example, the soft sensor would then predict an extreme strain load situation (operating data in an extreme range). The turbine controller could, for example, use the operating data to set the pitch angles appropriately (to keep, for example, the target value (e.g., strain load of the rotor blades) within safety limits or other predefined limits).

In another preferred variant of the invention, a processor is specifically configured to execute the computer readable instructions such that said processor is preferably configured to perform functions which implement a step/all steps of the inventive method.

In Fig. 2, an embodiment of the invention is shown which is implemented by a training device 200. The training device is configured for providing a soft sensor for a first wind turbine.

In detail, the training device 200 comprises a first acquisition module 210, a second acquisition module 220, a first training module for training 230 and a first providing module for providing 240, which are communicatively coupled or connected by a first bus 205 (e. g. a data bus such as a PCI (Peripheral Component Interconnect) bus

The first acquisition module 210 is configured (e.g., by means of a first processor) to acquire training input features for a target value of a training wind turbine during a training phase.

The second acquisition module 220 is configured (e.g., by means of the first processor or another processor) to acquire the target value of the training wind turbine during the training phase.

The first training module 230 is configured (e.g., by means of the first processor or another processor) to train the soft sensor during the training phase. In detail, the first training module 230 is configured to train the soft sensor by during means of the training input features and the target value during the training phase, wherein the target value is predictable as operating data by the soft sensor by means of the training input features.

The first providing module 240 is configured (e.g., by means of the first processor or another processor) to provide the trained soft sensor.

The training device 200 can comprise further components, such as a further processor and/or a memory unit and/or sensors and/or interfaces 201 connected to acquisition units of the training wind turbine to acquire the training input features and/or the target value. Preferably, the training device 200 comprises at least one further component, such as an input device (e.g. a computer keyboard or computer mouse) or a display device (e.g., a TFT-Monitor).

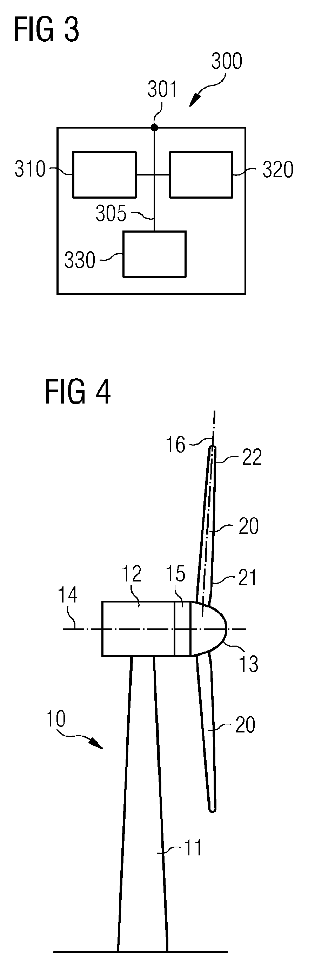

In Fig. 3, an embodiment of the invention is shown which is implemented by a prediction device 300. The prediction device 300 is adapted to predict operating data of a first wind turbine based on first input features of the wind turbine. In other words, the operating data is an approximation of the target value (described in the previous embodiments) by a (an already trained) soft sensor, wherein the (trained) soft sensor determines the approximation/prediction by means the first input features.

The prediction device 300 comprises third acquisition module 310, a first communication module 320 and a first predicting module 330 which are communicatively coupled or connected by a second bus 305 (e. g. a data bus such as a PCI (Peripheral Component Interconnect) bus).

The third acquisition module 310 is configured (e.g., by means of a first processor) to acquire first input features for the first wind turbine during an operational phase of the first wind turbine.

The first communication module 320 is configured (e.g., by means of a first processor) to transmit the first input features to a soft sensor, wherein the soft sensor is trainable during a training phase by means of training input features and a target value acquired for a training wind turbine during a training phase.

The first predicting module 330 is configured (e.g., by means of a first processor) to predict the operating data by the soft sensor by means of the first input features.

In other words, during the operational phase it is not necessary to equip the first wind turbine with sensors or an acquisition module to acquire the target value, because the (trained) soft sensor (e.g., trained by the training device depicted in Fig. 2) can determine/predict (or approximate) operating data based on the first input features.

The prediction device 300 can comprise further components, such as a further processor and/or a memory unit and/or sensors and/or interfaces 301 connected to acquisition units of the first wind turbine to acquire the first input. Preferably, the prediction device 300 comprises at least one further component, such as an input device (e.g. a computer keyboard or computer mouse) or a display device (e.g., a TFT-Monitor).

The prediction device 300 can, for example, be installed into a wind turbine (as depicted in Fig. 3).

In detail, in Fig. 3, a wind turbine 10 is shown. The wind turbine 10 comprises a nacelle 12 and a tower 11. The nacelle 12 is mounted at the top of the tower 11. The nacelle 12 is mounted rotatable with regard to the tower 11 by means of a yaw bearing. The axis of rotation of the nacelle 12 with regard to the tower 11 is referred to as the yaw axis.

The wind turbine 10 also comprises a hub 13 with three rotor blades 20 (of which two rotor blades 20 are depicted in FIG. 3). The hub 13 is mounted rotatable with regard to the nacelle 12 by means of a main bearing. The hub 13 is mounted rotatable about a rotor axis of rotation 14.

The wind turbine 10 furthermore comprises a main shaft, which connects the hub 13 with a rotor of a generator 15. The hub 13 is connected directly to the rotor, thus the wind turbine 10 is referred to as a gearless, direct driven wind turbine. As an alternative, the hub 13 may also be connected to the generator via a gearbox. This type of wind turbine is referred to as a geared wind turbine.

The generator 15 is accommodated within the nacelle 12. It comprises the rotor and a stator. The generator 15 is arranged and prepared for converting the rotational energy from the rotor into electrical energy.

A turbine controller can, for example, be included in the hub 13 or in the nacelle 12. The prediction device can be a part of the turbine controller or provides operating data to the turbine controller as illustrated in the previous embodiments. The prediction device can, for example, be connected to the generator 15 or a LIDAR to acquire the first input features to determine or predict the operating data. The turbine controller can, for example, control the pitch angle of the rotor blades to keep the target value within predefined limits.

In another embodiment the training device 200 can, for example, be installed into a wind turbine, e.g., a training wind turbine. The training wind turbine can, for example, be equipped with specific measurement equipment to provide the target value and the training input features to the corresponding acquisition modules. The training device 200 preferably trains the soft sensor (as, for example, described in Fig. 1A or Fig. 2) and provides a trained soft sensor for a wind turbine, as, for example, described in Fig. 1B, Fig. 3 or Fig. 4.

Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

While certain exemplary embodiments have been described and shown in the accompanying drawings, it is to be understood that such embodiments are merely illustrative of, and not restrictive on, the broad invention, and that this invention not be limited to the specific constructions and arrangements shown and described, since various other modifications may occur to those ordinarily skilled in the art.

The described embodiments and developments can be combined in any manner with one another as far as this is expedient. Further possible embodiments, developments and implementations of the invention also comprise not specifically cited combinations of features of the invention described above or in the following in relation to the exemplary embodiments.

## Claims

1. A computer-based method for providing a soft sensor for a first wind turbine by executing the following steps:
- acquiring (110) training input features for a target value of a training wind turbine during a training phase;
- acquiring (120) the target value of the training wind turbine during the training phase;
- training (130) the soft sensor during the training phase, wherein
- the soft sensor is trained by means of the training input features and the target value;
- the target value is predictable as operating data by the soft sensor by means of the training input features;
- providing (140) the trained soft sensor.

2. The method according to one of the preceding claims, wherein during the training phase the soft sensor is trained by means of correction data for predicting the operating data.

3. The method according to one of the preceding claims, preferably claim 2, wherein the correction data comprise information of upcoming events, wherein the upcoming events comprise changes of a wind speed.

4. The method according to one of the preceding claims, wherein the soft sensor is initialized with a physical model of the training wind turbine before training the soft sensor.

5. The method according to one of the preceding claims, preferably according to claim 4, wherein the physical model simulates a target value for input features and/or predefined speeds of wind.

6. The method according to one of the preceding claims, wherein input features comprise rotor speeds and/or nacelle accelerations of the training wind turbine.

7. A computer-based method for predicting operating data of a first wind turbine by executing the following steps:
- acquiring (150) first input features for the first wind turbine during an operational phase;
- transmitting (160) the first input features to a soft sensor, wherein the soft sensor is trainable during a training phase by means of training input features and a target value acquired for a training wind turbine during the training phase;
- predicting (170) the operating data by the soft sensor by means of the first input features.

8. The method according to claim 7, wherein the soft sensor takes correction data into account for predicting the operating data.

9. The method according to claims 7 or 8, preferably claim 8, wherein the correction data comprise information of upcoming events, wherein the upcoming events comprise changes of a wind speed.

10. The method according to one of the claims 7 - 9, preferably claim 9, wherein the correction data is acquired by a forth acquisition module during the operational phase.

11. The method according to one of the claims 7 - 10, wherein the operating data serves as an input for a turbine controller of the first wind turbine to keep the target value within a predefined limit.

12. The method according to one of the claims 7 - 11, preferably claim 11, the turbine controller adjusts control parameters of the generator and/or rotor of the first wind turbine by means of the operating data to keep the target value within the predefined limit.

13. A training device (200) for providing a soft sensor for a first wind turbine comprising:
- a first acquisition module (210) for acquiring training input features for a target value of a training wind turbine during a training phase of the training wind turbine;
- a second acquisition module (220) for acquiring the target value of the training wind turbine during the training phase;
- a first training module for training (230) the soft sensor during the training phase, wherein
- during the training phase the soft sensor is trained by means of the training input features and the target value;
- the target value is predictable as operating data by the soft sensor by means of the training input features;
- a providing module for providing (240) the trained soft sensor.

14. A prediction device (300) for predicting operating data of a first wind turbine comprising
- a third acquisition module (310) for acquiring first input features for the first wind turbine during an operational phase of the first wind turbine;
- a first communication module (320) for transmitting the first input features to a soft sensor, wherein the soft sensor is trainable during a training phase by means of training input features and a target value acquired for a training wind turbine during the training phase;
- a first prediction module (330) for predicting the operating data by the soft sensor by means of the first input features.

15. A wind turbine (10) comprising a training device (200) according to claim 13 and/or prediction device (300) according to claim 14.

16. The wind turbine (10) according to claim 15, wherein the wind turbine comprises a wind turbine controller which controls the wind turbine based on the operating data.

17. A computer program product storing executable instructions adapted to configure a manufacturing device to manufacture the system according to claim 15 or 16.

18. A computer program product storing executable instructions adapted to perform the method according to one of the preceding claims 1 to 6 and/or the method according to one of the preceding claims 7 to 12.

19. A providing device for the computer program product according to claim 17 or 18, wherein the providing device provides and/or saves the computer program product.
